# EUROPEAN PATENT SPECIFICATION

(11) **EP 3 531 650 B1**
(45) Date of publication and mention of the grant of the patent: **27.04.2022**
(21) Application number: 18158294.1
(22) Date of filing: 23.02.2018
(51) Int. Cl.: H04L 9/40, H04W 12/12, G06F 21/57

(54) **SYSTEM, METHOD, AND COMPUTER PROGRAM FOR TESTING SECURITY OF A DEVICE UNDER TEST**
SYSTEM, VERFAHREN UND COMPUTERPROGRAMM ZUM TESTEN DER SICHERHEIT EINER ZU TESTENDEN VORRICHTUNG
SYSTÈME, PROCÉDÉ ET PROGRAMME INFORMATIQUE POUR TESTER LA SÉCURITÉ D'UN DISPOSITIF SOUMIS À ESSAI

(43) Date of publication of application: 28.08.2019
(73) Proprietor: Rohde & Schwarz GmbH & Co. KG, 81671 München (DE)
(72) Inventor: Sterzbach, Bernhard, 81541 Munich (DE)
(74) Representative: Rupp, Christian

(56) References cited:
- EP-A1- 3 276 907
- WO-A1-2009/003126
- WO-A1-2011/073983
- US-A1- 2017 214 703

## Description

The invention relates to a system, method, and computer program for testing security of a device under test.

Generally, in times of an increasing number of devices providing at least one network connection, which leads to security vulnerabilities of said devices, there is a growing need of a system, method, and computer program for testing security of a device under test especially in order to reduce respective security risks.

US 2001/0034847 A1 relates to methods and apparatus for network security systems, which are particularly suited for finding vulnerabilities to computer hacking and unauthorized entry. In addition to this, an application of the network security system method and apparatus to computer networks is also disclosed for either an Internet-based system or an internal computer network system. However, with the aid of said test apparatus and method, testing security is quite inefficient due to the fact that authentication or encryption, respectively, are needed, which leads to increased costs.

In EP 3 276 907 A1 a test apparatus for testing a security of communication of a device under test, DUT, is disclosed, wherein the test apparatus comprises an RF unit having an RF interface adapted to receive from the device under test, DUT, an RF signal carrying Internet Protocol, IP, data including at least one IP address. An IP unit is adapted to analyze IP data carried in the received RF signal to check communication security of the device under test, DUT, using at least one security criterion, SC-CEP, related to a communication endpoint, CEP, addressed by the IP address and/or using at least one security criterion, SC-DUT, related to the device under test, DUT, itself and/or using at least one security criteria, SC-IPC, related to the IP connection between the device under test, DUT and the communication endpoint, CEP, addressed by the IP address extracted from the IP data carried in the RF signal.

There is the object to provide a system, a method and a computer program for testing security of a device under test in an efficient manner.

This object is solved by the features of the independent claims. Advantageous embodiments are recited in the dependent claims.

According to a first aspect of the invention, a system for testing security of a device under test is provided. Said system comprises a network simulation unit comprising at least two Internet Protocol interfaces, wherein a first Internet Protocol interface is configured to communicate with a database via Internet and a second Internet Protocol interface is configured to communicate with the device under test, an Internet Protocol data monitoring unit configured to monitor Internet Protocol data, and a non Internet Protocol data monitoring unit configured to monitor non Internet Protocol data. In this context, the Internet Protocol data monitoring unit and the non Internet Protocol data monitoring unit are further configured to monitor communication with respect to the network simulation unit in parallel. Advantageously, security of the device under test can be tested in an efficient manner.

According to a first preferred implementation form of the first aspect, the device under test is a mobile device. Advantageously, security of mobile devices can be investigated.

According to a further preferred implementation form of the first aspect, the communication channel between the second Internet Protocol interface and the device under test is a radio frequency channel. Advantageously, channels comprising a particularly high security risk can be tested.

According to a further preferred implementation form of the first aspect, the system further comprises an analyzing unit configured to analyze communication security on the basis of results of Internet Protocol and non Internet Protocol monitoring. Advantageously, security can be investigated in an accurate manner.

According to a further preferred implementation of the first aspect, the analyzing unit is further configured to compare the result of analysis with at least one threat pattern from a threat pattern database especially in the internet. Advantageously, latest threats can be simulated in an efficient manner.

According to a further preferred implementation form of the first aspect, the database communicating with the first Internet Protocol interface comprises the threat pattern database. Advantageously, costs and complexity can be reduced.

According to a further preferred implementation form of the first aspect, communication with respect to the device under test is based on Wireless Local Area Network, Global System for Mobile Communications, Universal Mobile Telecommunications System, Long Term Evolution, fifth generation network standards, Code Division Multiple Access, Wideband Code Division Multiple Access, or any combination thereof. Advantageously, this allows for testing a variety of devices under test.

According to a second aspect of the invention, a method for testing security of a device under test is provided. Said method comprises the steps of communicating with a database via Internet with the aid of a first Internet Protocol interface of a network simulation unit, communicating with the device under test with the aid of a second Internet Protocol interface of the network simulation unit, and monitoring communication with respect to the network simulation unit in parallel, thereby taking account of Internet Protocol data and non Internet Protocol data. Advantageously, security of the device under test can be tested in an efficient manner.

According to a first preferred implementation form of the second aspect, the device under test is a mobile device. Advantageously, security of mobile devices can be investigated.

According to a further preferred implementation form of the second aspect, the communication channel between the second Internet Protocol interface and the device under test is a radio frequency channel. Advantageously, channels comprising a particularly high security risk can be tested.

According to a further preferred implementation form of the second aspect, the method further comprises the step of analyzing communication security on the basis of results of Internet Protocol and non Internet Protocol monitoring. Advantageously, security can be investigated in an accurate manner.

According to a further preferred implementation form of the second aspect, the method further comprises the step of comparing the result of analysis with at least one threat pattern from a threat pattern database especially in the internet. Advantageously, latest threats can be simulated in an efficient manner.

According to a further preferred implementation form of the second aspect, the database communicating with the first Internet Protocol interface comprises the threat pattern database. Advantageously, costs and complexity can be reduced.

According to a further preferred implementation form of the second aspect, communication with respect to the device under test is based on Wireless Local Area Network, Global System for Mobile Communications, Universal Mobile Telecommunications System, Long Term Evolution, fifth generation network standards, Code Division Multiple Access, Wideband Code Division Multiple Access, or any combination thereof. Advantageously, this allows for testing a variety of devices under test.

According to a third aspect of the invention, a computer program with program code means is provided to make all steps of the method according to the second aspect of the invention, if the program is loaded on a computer or digital signal processor or a measurement device. Advantageously, security of the device under test can be tested in an efficient manner.

Exemplary embodiments of the invention are now further explained with respect to the drawings by way of example only, and not for limitation. In the drawings:
- Fig. 1: shows an exemplary embodiment of a system according to the first aspect of the invention; and
- Fig. 2: shows a flow chart of an exemplary embodiment of the second aspect of the invention.

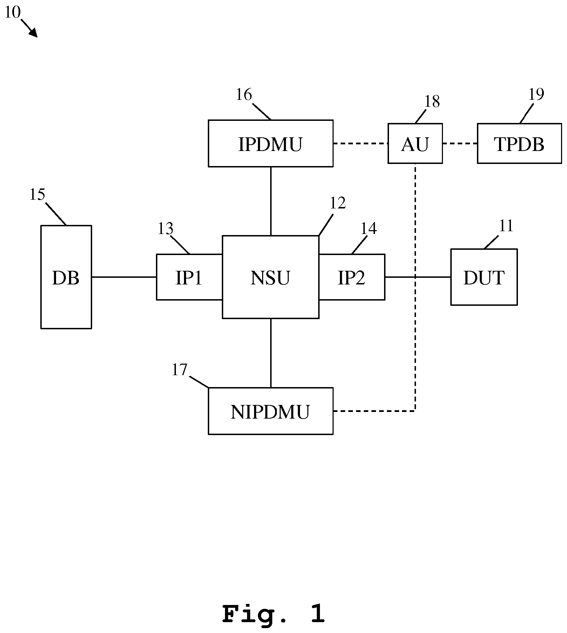

Fig. 1 shows an exemplary embodiment of a system 10 according to the first aspect of the invention. Said system 10 for testing security of a device under test 11 comprises a network simulation unit 12 comprising two Internet Protocol interfaces 13, 14. In this context, the first Internet Protocol interface 13 is configured to communicate with a database 15 especially via Internet and the second Internet Protocol interface 14 is configured to communicate with the device under test 11.

Furthermore, the system 10 also comprises an Internet Protocol data monitoring unit 16 configured to monitor Internet Protocol data, and a non Internet Protocol data monitoring unit 17 configured to monitor non Internet Protocol data. In this context, the Internet Protocol data monitoring unit 16 and the non Internet Protocol data monitoring unit 17 are further configured to monitor communication with respect to the network simulation unit 12 in parallel. It should be mentioned that additionally or alternatively, said monitoring units 16, 17 may be configured to monitor communication with respect to the network simulation unit 12 simultaneously. In addition to this, the device under test 11 may be a mobile device. In this context, the communication channel between the second Internet Protocol interface and the device under test may be a radio frequency channel.

Moreover, the system 10 may further comprise an analyzing unit 18 configured to analyze communication security on the basis of results of Internet Protocol and non Internet Protocol monitoring.

In this context, the analyzing unit 18 may further be configured to compare the result of analysis with at least one threat pattern from a threat pattern database 19 especially in the internet. Furthermore, it is noted that the database 15 communicating with the first Internet Protocol interface 13 may advantageously comprise the threat pattern database 19.

In addition to this, communication with respect to the device under test 11 may be based on Wireless Local Area Network, Global System for Mobile Communications, Universal Mobile Telecommunications System, Long Term Evolution, fifth generation network standards, Code Division Multiple Access, Wideband Code Division Multiple Access, or any combination thereof.

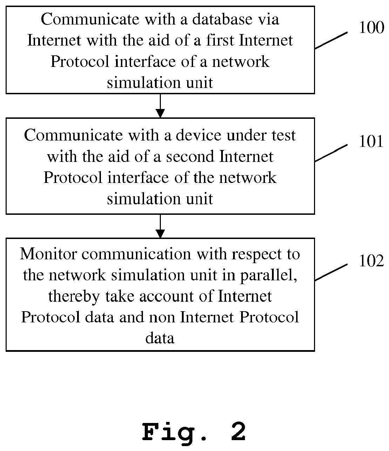

Moreover, Fig. 2 shows a flow chart of the inventive method. In a first step 100, it is communicated with a database via Internet with the aid of a first Internet Protocol interface of a network simulation unit. Then, in a second step 101, it is communicated with a device under test with the aid of a second Internet Protocol interface of the network simulation unit. Furthermore, in a third step 102, communication with respect to the network simulation unit is monitored in parallel, thereby it is taken account of Internet Protocol data and non Internet Protocol data. In addition to this, it is noted that said device under test may be a mobile device. In this context, the communication channel between the second Internet Protocol interface and the device under test may be a radio frequency channel.

Furthermore, the method may further comprise the step of analyzing communication security on the basis of results of Internet Protocol and non Internet Protocol monitoring. In this context, the method may further comprise the step of comparing the result of analysis with at least one threat pattern from a threat pattern database especially in the internet. Additionally, it is noted that the database communicating with the first Internet Protocol interface may comprise the threat pattern database.

Moreover, as already mentioned above, communication with respect to the device under test may be based on Wireless Local Area Network, Global System for Mobile Communications, Universal Mobile Telecommunications System, Long Term Evolution, fifth generation network standards, Code Division Multiple Access, Wideband Code Division Multiple Access, or any combination thereof.

Now, in addition to all the explanations above, some exemplary use cases should be discussed in the following. In this context, it is to be understood that the system 10 and/or parts thereof are configured in a manner that these use cases or user stories can be realized. Additionally, the same applies to the steps performed by the inventive method.

Typically, in addition to the analysis of the Internet Protocol traffic with respect to the device under test, the configuration of the communication channel, preferably the radio frequency channel, more preferably the simulated radio frequency channel, between the second Internet Protocol interface and the device under test is also analyzed for security weaknesses. For instance, missing encryption or the use of outdate encryption methods on said communication channel is reported. Preferably, active security testing is done on both the Internet Protocol and radio frequency link.

Furthermore, during establishment of the connection, especially the radio frequency connection, to the device under test, a tester according to the present invention, especially the network simulation unit, may be configured to actively attempt negotiating a connection with non-existent or insufficient encryption. In this context, the device under test may advantageously be expected to reject such attempts. Likewise, said tester, especially the network simulation unit, may further be configured to check the capabilities of the device under test and to test at least one or all available Radio Access Technologies and/or bands.

In addition to this, all other communication channels being available to the device under test over said connection, especially said radio frequency connection, are monitored especially with the aid of network simulation unit or at least one of the monitoring units.

Preferably, said monitoring process comprises the monitoring of communication on speech channels and/or voice carriers, call signalling, communication by text message or any combination thereof. Additionally, all such communication may advantageously be reported.

Moreover, especially the network simulation unit may further be configured to actively initiate communication to the device under test on any channel being available at the connection, especially the radio frequency connection. For instance, in the case that a cellular network is simulated, text messages may be sent to the device under test or voice calls may be made. In this manner, the user can advantageously verify proper handling or rejection, respectively.

In addition to this or as an alternative, especially the network simulation unit may further be configured to inject additional communication, preferably Internet Protocol communication, with respect to the device under test in order to allow for network scanning and/or vulnerability testing. In this manner, it can advantageously be verified that the device under test is not vulnerable especially to known attacks and/or exploits.

Moreover, especially the network simulation unit may further be configured to simulate random activity such as port scans, incoming calls, unsolicited text messages or any combination thereof. These test cases may especially be important with respect to Internet of Things devices under test, wherein unexpected activities could especially lock up internal interfaces and/or deplete the battery.

Additionally or alternatively, especially the network simulation unit may be configured to use at least one built-in Dynamic Host Configuration Protocol and/or Domain Name System server to redirect the device under test communication to the at least one built-in server. Said at least one built-in server may advantageously be configured to mimic at least one endpoint server typically used in normal operation especially in the field. In this case, the device under test may preferably be expected to detect such redirections, for example, by Secure Sockets Layer authentication. In this context, especially the user may advantageously provide and/or configure the respective Secure Sockets Layer certificate presented by the at least one built-in server. In this manner, especially the reaction of the device under test may advantageously be tested with respect to expired, revoked and/or faulty certificates.

Finally, especially the network simulation unit may further be configured to perform preferably known attack and/or exploits on the communication channel, especially the radio frequency channel, to the device under test, exemplarily through Short Message Service transmission, over-the-air configuration, Subscriber Identity Module toolkit access, or any combination thereof. In this context, up-to-date attack method may preferably be provided through a cloud service.

While various embodiments of the present invention have been described above, it should be understood that they have been presented by way of example only, and not limitation. Numerous changes to the disclosed embodiments can be made in accordance with the disclosure herein without departing from the scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system (10) for testing security of a device under test (11), the system (10) comprising:
a network simulation unit (12) comprising at least two Internet Protocol interfaces (13, 14), wherein a first Internet Protocol interface (13) is configured to communicate with a database (15) via Internet and a second Internet Protocol interface (14) is configured to communicate with the device under test (11),
an Internet Protocol data monitoring unit (16) configured to monitor Internet Protocol data, and
a non Internet Protocol data monitoring unit (17) configured to monitor non Internet Protocol data,
wherein the Internet Protocol data monitoring unit (16) and the non Internet Protocol data monitoring unit (17) are further configured to monitor communication with respect to the network simulation unit (12) in parallel and simultaneously,
wherein the system (10) further comprises an analyzing unit (18) configured to analyze communication security on the basis of results of Internet Protocol and non Internet Protocol monitoring,
wherein the system (10) is configured to analyze the configuration of the communication channel between the second Internet Protocol interface (14) and the device under test for security weaknesses, and
wherein the network simulation unit (12) is further configured in that during establishment of a connection to the device under test (11) to actively attempt negotiating a connection with non-existent or insufficient encryption.

2. The system (10) according to claim 1,
wherein the device under test (11) is a mobile device.

3. The system (10) according to claim 1 or 2,
wherein the communication channel between the second Internet Protocol interface (14) and the device under test (11) is a radio frequency channel.

4. The system (10) according to any of the claims 1 to 3, wherein the analyzing unit (18) is further configured to compare the result of analysis with at least one threat pattern from a threat pattern database (19) especially in the internet.

5. The system (10) according to claim 4,
wherein the database (15) communicating with the first Internet Protocol interface (13) comprises the threat pattern database (19).

6. The system (10) according to any of the claims 1 to 5, wherein communication with respect to the device under test (11) is based on Wireless Local Area Network, Global System for Mobile Communications, Universal Mobile Telecommunications System, Long Term Evolution, fifth generation network standards, Code Division Multiple Access, Wideband Code Division Multiple Access, or any combination thereof.

7. A method for testing security of a device under test (11), the method being performed by a system and comprising the steps of:
communicating with a database (15) via Internet with the aid of a first Internet Protocol interface (13) of a network simulation unit (12) of the system, communicating with the device under test (11) with the aid of a second Internet Protocol interface (14) of the network simulation unit (12), and
monitoring communication with respect to the network simulation unit (12) in parallel and simultaneously with the aid of an Internet Protocol data monitoring unit of the system and a non Internet Protocol data monitoring unit of the system, thereby taking account of Internet Protocol data and non Internet Protocol data,
analyzing communication security on the basis of results of Internet Protocol and non Internet Protocol monitoring with the aid of an analyzing unit of the system, and
analyzing the configuration of the communication channel between the second Internet Protocol interface (14) and the device under test for security weaknesses,
wherein during establishment of a connection to the device under test (11) ,the network simulation unit (12) actively attempts negotiating a connection with non-existent or insufficient encryption.

8. The method according to claim 7,
wherein the device under test (11) is a mobile device.

9. The method according to claim 7 or 8,
wherein the communication channel between the second Internet Protocol interface (14) and the device under test (11) is a radio frequency channel.

10. The method according to any of the claims 7 to 9,
wherein the method further comprises the step of analyzing communication security on the basis of results of Internet Protocol and non Internet Protocol monitoring.

11. The method according to claim 10,
wherein the method further comprises the step of comparing the result of analysis with at least one threat pattern from a threat pattern database (19) especially in the internet.

12. The method according to claim 11,
wherein the database (15) communicating with the first Internet Protocol interface (13) comprises the threat pattern database (19).

13. The method according to any of the claims 7 to 12, wherein communication with respect to the device under test (11) is based on Wireless Local Area Network, Global System for Mobile Communications, Universal Mobile Telecommunications System, Long Term Evolution, fifth generation network standards, Code Division Multiple Access, Wideband Code Division Multiple Access, or any combination thereof.

14. Computer program with program code means to make all steps of any of claims 7 to 13, if the program is loaded on a computer or digital signal processor or a measurement device.

## Patentansprüche

1. System (10) zum Testen der Sicherheit einer zu testenden Vorrichtung (11), wobei das System (10) Folgendes umfasst:
eine Netzwerksimulationseinheit (12), die mindestens zwei Internetprotokollschnittstellen (13, 14) umfasst, wobei eine erste Internetprotokollschnittstelle (13) dazu ausgelegt ist, via Internet mit einer Datenbank (15) zu kommunizieren, und eine zweite Internetprotokollschnittstelle (14), dazu ausgelegt ist, mit der zu testenden Vorrichtung (11) zu kommunizieren,
eine Internetprotokolldatenüberwachungseinheit (16), die dazu ausgelegt ist, Internetprotokolldaten zu überwachen, und
eine Nicht-Internetprotokolldatenüberwachungseinheit (17), die dazu ausgelegt ist, Nicht-Internetprotokolldaten zu überwachen,
wobei die Internetprotokolldatenüberwachungseinheit (16) und die Nicht-Internetprotokolldatenüberwachungseinheit (17) ferner dazu ausgelegt sind, eine Kommunikation mit Bezug auf die Netzwerksimulationseinheit (12) parallel und gleichzeitig zu überwachen,
wobei das System (10) ferner eine Analyseeinheit (18) umfasst, die dazu ausgelegt ist, auf Basis von Ergebnissen der Internetprotokoll- und der Nicht-Internetprotokollüberwachung eine Kommunikationssicherheit zu analysieren,
wobei das System (10) dazu ausgelegt ist, die Auslegung des Kommunikationskanals zwischen der zweiten Internetprotokollschnittstelle (14) und der zu testenden Vorrichtung auf Sicherheitsschwächen zu analysieren, und
wobei die Netzwerksimulationseinheit (12) ferner dazu ausgelegt ist, während des Aufbaus einer Verbindung zur zu testenden Vorrichtung (11) das Aushandeln einer Verbindung mit einer nicht existierenden oder einer unzureichenden Verschlüsselung aktiv zu versuchen.

2. System (10) nach Anspruch 1,
wobei die zu testende Vorrichtung (11) eine mobile Vorrichtung ist.

3. System (10) nach Anspruch 1 oder 2,
wobei der Kommunikationskanal zwischen der zweiten Internetprotokollschnittstelle (14) und der zu testenden Vorrichtung (11) ein Funkfrequenzkanal ist.

4. System (10) nach einem der Ansprüche 1 bis 3,
wobei die Analyseeinheit (18) ferner dazu ausgelegt ist, das Ergebnis der Analyse mit mindestens einem Bedrohungsmuster aus einer Bedrohungsmusterdatenbank (19) insbesondere im Internet zu vergleichen.

5. System (10) nach Anspruch 4,
wobei die Datenbank (15), die mit der ersten Internetprotokollschnittstelle (13) kommuniziert, die Bedrohungsmusterdatenbank (19) umfasst.

6. System (10) nach einem der Ansprüche 1 bis 5,
wobei die Kommunikation mit Bezug auf die zu testende Vorrichtung (11) auf einem drahtlosen lokalen Netzwerk, einem globalen System für die mobile Kommunikation, einem universellen mobilen Telekommunikationssystem, Long Term Evolution, Netzwerkstandards der fünften Generation, einem Codemultiplexzugang, einem Breitbandcodemultiplexzugang oder einer Kombination davon basiert.

7. Verfahren zum Testen der Sicherheit einer zu testenden Vorrichtung (11), wobei das Verfahren von einem System durchgeführt wird und die folgenden Schritte umfasst:
Kommunizieren mit einer Datenbank (15) via Internet mithilfe einer ersten Internetprotokollschnittstelle (13) einer Netzwerksimulationseinheit (12) des Systems,
Kommunizieren mit der zu testenden Vorrichtung (11) mithilfe einer zweiten Internetprotokollschnittstelle (14) der Netzwerksimulationseinheit (12), und
paralleles und gleichzeitiges Überwachen der Kommunikation mit Bezug auf die Netzwerksimulationseinheit (12) mithilfe einer Internetprotokolldatenüberwachungseinheit des Systems und einer Nicht-Internetprotokolldatenüberwachungseinheit des Systems, dadurch Berücksichtigen von Internetprotokolldaten und Nicht-Internetprotokolldaten,
Analysieren der Kommunikationssicherheit auf Basis der Ergebnisse der Internetprotokoll- und der Nicht-Internetprotokollüberwachung mithilfe einer Analyseeinheit des Systems, und
Analysieren der Auslegung des Kommunikationskanals zwischen der zweiten Internetprotokollschnittstelle (14) und der zu testenden Vorrichtung auf Sicherheitsschwächen,
wobei die Netzwerksimulationseinheit (12) während des Aufbaus einer Verbindung zur zu testenden Vorrichtung (11) das Aushandeln einer Verbindung mit einer nicht existierenden oder einer unzureichenden Verschlüsselung aktiv versucht.

8. Verfahren nach Anspruch 7,
wobei die zu testende Vorrichtung (11) eine mobile Vorrichtung ist.

9. Verfahren nach Anspruch 7 oder 8,
wobei der Kommunikationskanal zwischen der zweiten Internetprotokollschnittstelle (14) und der zu testenden Vorrichtung (11) ein Funkfrequenzkanal ist.

10. Verfahren nach einem der Ansprüche 7 bis 9,
wobei das Verfahren ferner den Schritt des Analysierens der Kommunikationssicherheit auf Basis von Ergebnissen der Internetprotokoll- und der Nicht-Internetprotokollüberwachung umfasst.

11. Verfahren nach Anspruch 10,
wobei das Verfahren ferner den Schritt des Vergleichens des Ergebnisses der Analyse mit mindestens einem Bedrohungsmuster aus einer Bedrohungsmusterdatenbank (19) insbesondere im Internet umfasst.

12. Verfahren nach Anspruch 11,
wobei die Datenbank (15), die mit der ersten Internetprotokollschnittstelle (13) kommuniziert, die Bedrohungsmusterdatenbank (19) umfasst.

13. Verfahren nach einem der Ansprüche 7 bis 12,
wobei die Kommunikation mit Bezug auf die zu testende Vorrichtung (11) auf einem drahtlosen lokalen Netzwerk, einem globalen System für die mobile Kommunikation, einem universellen mobilen Telekommunikationssystem, Long Term Evolution, Netzwerkstandards der fünften Generation, einem Codemultiplexzugang, einem Breitbandcodemultiplexzugang oder einer Kombination davon basiert.

14. Computerprogramm mit Programmcodemitteln zum Umsetzen aller Schritte eines der Ansprüche 7 bis 13, wenn das Programm in einen Computer oder einen digitalen Signalprozessor oder eine Messvorrichtung geladen wird.

## Revendications

1. Système (10) pour tester la sécurité d'un dispositif à l'essai (11), le système (10) comprenant :
une unité de simulation de réseau (12) comprenant au moins deux interfaces de protocole Internet (13, 14), dans lequel une première interface de protocole Internet (13) est configurée pour communiquer avec une base de données (15) via Internet et une deuxième interface de protocole Internet (14) est configurée pour communiquer avec le dispositif à l'essai (11),
une unité de surveillance de données de protocole Internet (16) configurée pour surveiller des données de protocole Internet, et
une unité de surveillance de données de protocole non Internet (17) configurée pour surveiller des données de protocole non Internet,
dans lequel l'unité de surveillance de données de protocole Internet (16) et l'unité de surveillance de données de protocole non Internet (17) sont en outre configurées pour surveiller la communication par rapport à l'unité de simulation de réseau (12) en parallèle et simultanément,
dans lequel le système (10) comprend en outre une unité d'analyse (18) configurée pour analyser la sécurité des communications sur la base de résultats de surveillance de protocole Internet et de protocole non Internet,
dans lequel le système (10) est configuré pour analyser la configuration du canal de communication entre la deuxième interface de protocole Internet (14) et le dispositif à l'essai concernant les failles de sécurité, et
dans lequel l'unité de simulation de réseau (12) est en outre configurée, en ce que pendant l'établissement d'une connexion au dispositif à l'essai (11), pour tenter activement de négocier une connexion avec un cryptage inexistant ou insuffisant.

2. Système (10) selon la revendication 1,
dans lequel le dispositif à l'essai (11) est un dispositif mobile.

3. Système (10) selon la revendication 1 ou 2,
dans lequel le canal de communication entre la deuxième interface de protocole Internet (14) et le dispositif à l'essai (11) est un canal de fréquence radio.

4. Système (10) selon l'une quelconque des revendications 1 à 3, dans lequel l'unité d'analyse (18) est en outre configurée pour comparer le résultat de l'analyse avec au moins un modèle de menace provenant d'une base de données de modèles de menace (19) notamment sur Internet.

5. Système (10) selon la revendication 4,
dans lequel la base de données (15) communiquant avec la première interface de protocole Internet (13) comprend la base de données de modèles de menace (19).

6. Système (10) selon l'une quelconque des revendications 1 à 5,
dans lequel la communication par rapport au dispositif à l'essai (11) est basée sur un réseau local sans fil, un système global de communications mobiles, un système de télécommunications mobiles universelles, une évolution à long terme, des normes de réseau de cinquième génération, un accès multiple par répartition de code, un accès multiple par répartition de code à large bande, ou toute combinaison de ceux-ci.

7. Procédé pour tester la sécurité d'un dispositif à l'essai (11), le procédé étant réalisé par un système et comprenant les étapes consistant à :
communiquer avec une base de données (15) via Internet à l'aide d'une première interface de protocole Internet (13) d'une unité de simulation de réseau (12) du système,
communiquer avec le dispositif à l'essai (11) à l'aide d'une deuxième interface de protocole Internet (14) de l'unité de simulation de réseau (12), et
surveiller la communication par rapport à l'unité de simulation de réseau (12) en parallèle et simultanément à l'aide d'une unité de surveillance de données de protocole Internet du système, et d'une unité de surveillance de données de protocole non Internet du système, prenant ainsi en compte les données de protocole Internet et les données de protocole non Internet,
analyser la sécurité des communications sur la base de résultats de surveillance de protocole Internet et de protocole non Internet à l'aide d'une unité d'analyse du système, et
analyser la configuration du canal de communication entre la deuxième interface de protocole Internet (14) et le dispositif à l'essai concernant les failles de sécurité,
dans lequel, pendant l'établissement d'une connexion au dispositif à l'essai (11), l'unité de simulation de réseau (12) tente activement de négocier une connexion avec un cryptage inexistant ou insuffisant.

8. Procédé selon la revendication 7,
dans lequel le dispositif à l'essai (11) est un dispositif mobile.

9. Procédé selon la revendication 7 ou 8,
dans lequel le canal de communication entre la deuxième interface de protocole Internet (14) et le dispositif à l'essai (11) est un canal de fréquence radio.

10. Procédé selon l'une quelconque des revendications 7 à 9,
dans lequel le procédé comprend en outre l'étape consistant à analyser la sécurité des communications sur la base de résultats de surveillance de protocole Internet et de protocole non Internet.

11. Procédé selon la revendication 10,
dans lequel le procédé comprend en outre l'étape consistant à comparer le résultat de l'analyse avec au moins un modèle de menace provenant d'une base de données de modèles de menace (19) notamment sur Internet.

12. Procédé selon la revendication 11,
dans lequel la base de données (15) communiquant avec la première interface de protocole Internet (13) comprend la base de données de modèles de menace (19).

13. Procédé selon l'une quelconque des revendications 7 à 12, dans lequel la communication par rapport au dispositif à l'essai (11) est basée sur un réseau local sans fil, un système global de communications mobiles, un système de télécommunications mobiles universelles, une évolution à long terme, des normes de réseau de cinquième génération, un accès multiple par répartition de code, un accès multiple par répartition de code à large bande, ou toute combinaison de ceux-ci.

14. Programme informatique avec un code de programme permettant d'effectuer toutes les étapes de l'une quelconque des revendications 7 à 13, si le programme est chargé sur un ordinateur ou un processeur de signaux numériques ou un dispositif de mesure.
